# EUROPÄISCHE PATENTANMELDUNG

(11) **EP 2 187 051 A1**
(43) Veröffentlichungstag der Anmeldung: **19.05.2010**
(21) Anmeldenummer: 08019770.0
(22) Anmeldetag: 12.11.2008
(51) Int. Cl.: F03G 6/00, F01K 23/10

(54) **Verfahren und Vorrichtung zur Zwischenüberhitzung in einem solarthermischen Kraftwerk mit indirekter Verdampfung**

(71) Anmelder: SIEMENS AKTIENGESELLSCHAFT, 80333 München (DE)
(72) Erfinder: Birnbaum, Jürgen, 90419 Nürnberg (DE); Fichtner, Markus, 91639 Wolframs-Eschenbach (DE)

(57) **Zusammenfassung**

Die Erfindung betrifft eine solarthermische Kraftwerksanlage (1) mit einem solaren Kraftwerksteil und einem konventionellen Kraftwerksteil, wobei der solare Kraftwerksteil einen Wärmeträgermedium-Kreislauf (22) umfasst und der konventionelle Kraftwerksteil einen Arbeitsfluid-Kreislauf (12) umfasst, und einem solaren Dampferzeuger zur Übertragung von Wärme vom Wärmeträgermedium-Kreislauf (22) auf den Arbeitsfluid-Kreislauf (12), mit einer Dampfturbine (4) zur Entspannung eines Arbeitsfluids unter Abgabe technischer Arbeit, wobei die Dampfturbine (4) eine Hochdruckstufe (5), eine Mitteldruckstufe (6) und eine Niederdruckstufe (7) umfasst, mit mindestens einem zwischen die Hochdruckstufe (5) und die Mitteldruckstufe (6) geschalteten ersten Zwischenüberhitzer (17) und mindestens einem mit dem ersten Zwischenüberhitzer (17) zusammenwirkenden und zwischen die Mitteldruckstufe (6) und die Niederdruckstufe (7) geschalteten zweiten Zwischenüberhitzer (18) zum gezielten Einstellen der Dampfzustände des Arbeitsfluids. Die Erfindung betrifft auch ein Verfahren zum Betrieb einer solarthermischen Kraftwerksanlage (1).

## Beschreibung

Die Erfindung betrifft ein Verfahren zum Betrieb einer solarthermischen Kraftwerksanlage, sowie eine solarthermische Kraftwerksanlage mit einem Arbeitsfluid-Kreislauf, einem auf indirekter Verdampfung basierenden solaren Dampferzeuger und einer Dampfturbine zur Entspannung des Arbeitsfluids unter Abgabe technischer Arbeit.

Solarthermische Kraftwerke stellen eine alternative zur herkömmlichen Stromerzeugung dar. Sie nutzen solare Strahlungsenergie um elektrische Energie zu produzieren und können mit Parabolrinnenkollektoren, Solar-Turm und Fresnel-Kollektoren ausgeführt werden.

Solarthermische Kraftwerke bestehen aus einem solaren Kraftwerksteil zur Absorption der Sonnenenergie und einem zweiten meist konventionellen Kraftwerksteil.

Der solare Kraftwerksteil umfasst ein Solarfeld, in dem ein Wärmeträgermedium erhitzt wird. Als Wärmeträgermedium kann dabei Thermoöl, Luft oder Salzschmelze zum Einsatz kommen. Der konventionelle Kraftwerksteil umfasst einen konventionellen Wasser-Dampf-Kreislauf. Solarthermische Kraftwerksanlagen mit indirekter Verdampfung umfassen weiterhin eine Wärmetauschergruppe aus Vorwärmer, Verdampfer und Überhitzer, in denen die Wärmeenergie vom Wärmeträgermedium auf den Wasser-Dampf-Kreislauf übertragen wird.

Die Überhitzung dient der Erhöhung des Anlagenwirkungsgrades und ist beim Betrieb von Dampfturbinen erforderlich, da größere Mengen kondensierter Flüssigkeitstropfen die Turbinenschaufeln schädigen. Zur besseren Energieausnutzung des erzeugten Dampfes wird bei Kraftwerken mit höheren Dampfdrücken eine Zwischenüberhitzung eingebaut. Beim Zwischenüberhitzungsprozess wird Frischdampf über eine Hochdruckturbine geleitet. Vor Eintritt in die in Dampfrichtung nachgeschaltete Arbeitseinheit (z.B. Mitteldruckturbine) fließt der Dampf dann in einen Zwischenüberhitzer im Dampfkessel, wo er erneut überhitzt wird. Generell wird das Zwischenüberhitzungs-Niveau so gewählt, dass der zu erhitzende Dampf auf optimale Temperatur erhitzt werden kann, um die Vorteile des Heißdampfes möglichst für den gesamten Prozess zur Verfügung zu haben.

Vorteile der Zwischenüberhitzung:
■ Der Dampfkreislauf arbeitet mit einer höheren mittleren Temperatur der Wärmeaufnahme als ein nicht zwischenüberhitzter Kreislauf. Das erhöht den Wirkungsgrad, so dass die Turbine bei gleicher Wärmezufuhr im Kessel eine höhere Leistung erbringt.
■ Der Feuchtigkeitsgehalt in der Niederdruckturbine ist niedriger, wenn der Dampf nach der Expansion in der Hochdruckturbine zwischenüberhitzt wird. Der Wirkungsgrad erhöht sich; zugleich verringert sich die sonst übliche, durch Wassertropfen verursachte Erosion.
■ Die Zwischenüberhitzung ermöglicht einen höheren Eintrittsdruck und/oder geringeren Austrittsdruck, da die Dampffeuchtigkeit erniedrigt wird.

All diese Faktoren erhöhen den Wirkungsgrad und die Lebensdauer der Turbine.

Bei solarthermischen Kraftwerken ist aufgrund der niedrigen Prozessparameter daher meistens eine Zwischenüberhitzung des nach Durchströmen der Hochdruckturbine teilentspannten Dampfes mittels eines Wärmetauschers vorgesehen.

Allerdings unterscheidet sich die Zwischenüberhitzung im solarthermischen Kraftwerk von einem konventionellen Kraftwerk (DKW) oder Gas- und Dampfkraftwerk (GuD) vor allem dahingehend, dass im solarthermischen Kraftwerk das Wärmeträgermedium mit geringem Aufwand zur Turbine gefördert werden kann. Dadurch lassen sich mit mäßigem Aufwand geringe Druckverluste auf der Dampfseite realisieren, da der Dampf im Gegensatz zum DKW nur über sehr kurze Distanzen transportiert werden muss. Dies wirkt sich vorteilhaft auf den Wirkungsgrad aus.

Die auf eine Vorrichtung bezogene Aufgabe der Erfindung ist die Angabe einer solarthermischen Kraftwerksanlage mit verbesserter Zwischenüberhitzung. Eine weitere Aufgabe ist die Angabe eines Verfahrens zum Betrieb einer solchen Kraftwerksanlage.

Diese Aufgabe wird erfindungsgemäß gelöst durch die Merkmale des Patentanspruchs 1 sowie des Patentanspruchs 9.

Weitere Vorteile sind in den Unteransprüchen genannt.

Die erfinderische solarthermische Kraftwerksanlage umfasst einen solaren Kraftwerksteil und einen konventionellen Kraftwerksteil, wobei der solare Kraftwerksteil einen Wärmeträgermedium-Kreislauf umfasst und der konventionelle Kraftwerksteil einen Arbeitsfluid-Kreislauf umfasst, und einen Dampferzeuger zur Übertragung von Wärme vom Wärmeträgermedium-Kreislauf auf den Arbeitsfluid-Kreislauf, mit einer Dampfturbine zur Entspannung eines Arbeitsfluids unter Abgabe technischer Arbeit, wobei die Dampfturbine eine Hochdruckstufe, eine Mitteldruckstufe und eine Niederdruckstufe umfasst, mit mindestens einem zwischen die Hochdruckstufe und die Mitteldruckstufe geschalteten ersten Zwischenüberhitzer und mindestens einem mit dem ersten Zwischenüberhitzer zusammenwirkenden und zwischen die Mitteldruckstufe und die Niederdruckstufe geschalteten zweiten Zwischenüberhitzer zum gezielten Einstellen der Dampfzustände des Arbeitsfluids.

Vorteilhafterweise sind die Zwischenüberhitzer primärseitig in den Wärmeträgermedium-Kreislauf und sekundärseitig in den Arbeitsfluid-Kreislauf geschaltet, da im solarthermischen Kraftwerk das Wärmeträgermedium mit geringem Aufwand zur Turbine gefördert werden kann und somit geringe Druckverluste auf der Arbeitsfluidseite erzielt werden können.

In einer vorteilhaften Ausführung ist der mindestens eine zweite Zwischenüberhitzer primärseitig in Strömungsrichtung eines Wärmeträgermediums dem mindestens einen ersten Zwischenüberhitzer nachgeschaltet. Hierdurch lässt sich die Dampftemperatur vor der Niederdruckstufe noch einmal mit geringem Aufwand anheben, da die Wärmetauscher so nah wie möglich an der Turbine platziert werden.

In einer anderen vorteilhaften Ausführung ist der mindestens eine zweite Zwischenüberhitzer primärseitig in Strömungsrichtung eines Wärmeträgermediums dem mindestens einen ersten Zwischenüberhitzer parallel geschaltet ist. Dadurch kann die Dampftemperatur vor der Niederdruckstufe wieder auf das Niveau des Frischdampfes angehoben werden. Dies führt zu einer weiteren Wirkungsgradsteigerung der Anlage.

Zweckmäßigerweise ist das Wärmeträgermedium ein Thermoöl.

Weiterhin zweckmäßig ist das Arbeitsfluid Wasser bzw. Wasser-dampf.

In einer vorteilhaften Ausführungsform umfasst die Mitteldruckstufe einen ersten Mitteldruckstufenabschnitt und einen zweiten Mitteldruckstufenabschnitt, wobei mindestens ein dritter Zwischenüberhitzer sekundärseitig zwischen den ersten Mitteldruckstufenabschnitt und den zweiten Mitteldruckstufenabschnitt geschaltet ist. Dies ist deswegen vorteilhaft, weil einerseits bei einer solarthermischen Kraftwerksanlage im Gegensatz zum konventionellen Dampfkraftwerk der zu überhitzende Dampf nicht weite Strecken zurück zum Kessel transportiert werden muss, sondern das Wärmeträgermedium mit geringem Aufwand zur Turbine gefördert werden kann, wodurch die Zwischenüberhitzung mit geringen Druckverlusten im Arbeitsfluid realisiert werden kann und zweitens weil dadurch der Druck des Arbeitsfluids noch einmal deutlich angehoben werden kann.

Zweckmäßigerweise ist der dritte Zwischenüberhitzer, ebenso wie der erste und der zweite Zwischenüberhitzer, primärseitig in den Wärmeträgermedium-Kreislauf geschaltet.

Hoch- Mittel- und Niederdruckstufen können dabei als separate Teilturbinen oder als Turbinenabschnitte vorliegenden.

Bezogen auf das Verfahren wird die Aufgabe durch ein Verfahren zum Betrieb einer solarthermischen Kraftwerksanlage gelöst, in welcher ein Arbeitsfluid in einem Kreislauf geführt wird, bei dem das Arbeitsfluid unter Abgabe technischer Arbeit in einer Dampfturbine, umfassend eine Hochdruckstufe, eine Mitteldruckstufe und eine Niederdruckstufe, entspannt wird und zwischen Hochdruckstufe und Mitteldruckstufe und zwischen Mitteldruckstufe und Niederdruckstufe überhitzt wird.

Es ist vorteilhaft, wenn das Arbeitsfluid im Bereich der Mitteldruckstufe ebenfalls zwischenüberhitzt wird.

Das Verfahren bedient sich der beschriebenen Vorrichtung. Die Vorteile der Vorrichtung ergeben sich daher auch für das Verfahren.

Weitere Vorteile, Merkmale und Einzelheiten der Erfindung ergeben sich aus der nachfolgenden Beschreibung bevorzugter Ausführungsbeispiele und Zeichnungen sowie aus weiteren Unteransprüchen.

Nachfolgend wird die Erfindung beispielhaft anhand der Zeichnungen näher erläutert.

Darin zeigen in vereinfachter und nicht maßstäblicher Darstellung:
- FIG 1: eine doppelte Zwischenüberhitzung mittels zweier Wärmetauscher (enthitztes Wärmeträgermedium wird im zweiten Wärmetauscher zur Überhitzung des Dampfes genutzt);
- FIG 2: eine doppelte Zwischenüberhitzung mittels zweier Wärmetauscher (beide mit Wärmetauschermedium direkt vom Solarfeld als heizendem Medium);
- FIG 3: eine doppelte Zwischenüberhitzung bei der Mitteldruckstufe und Niederdruckstufe in einer Teilturbine zusammengefasst sind, mit einer Anzapfung für die zweite Zwischenüberhitzung;
- FIG 4: eine doppelte Zwischenüberhitzung, bei der Hochdruckstufe, Mitteldruckstufe und Niederdruckstufe in einer Turbine zusammengefasst sind, mit zwei Anzapfungen für die Zwischenüberhitzungen und
- FIG 5: eine dreifache Zwischenüberhitzung, bei der die Mitteldruckstufe einen ersten und einen zweiten Mitteldruckstufenabschnitt umfasst.

Gleiche Teile sind in allen Figuren mit denselben Bezugszeichen versehen.

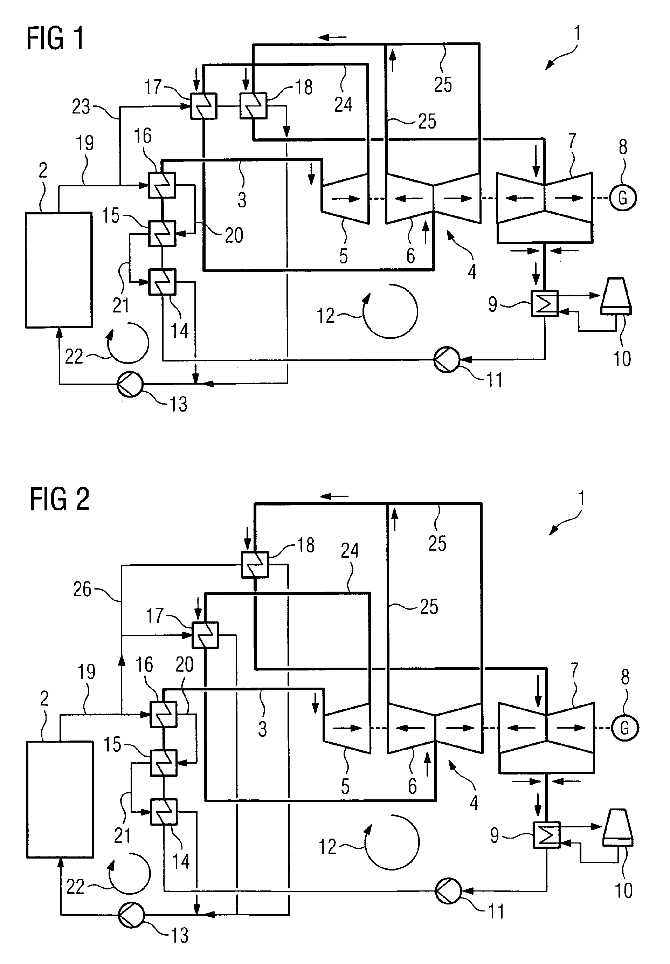

Figur 1 zeigt den schematischen Aufbau einer ersten Ausführungsform eines solarthermischen Kraftwerks 1 mit indirekter Verdampfung nach der Erfindung. Die solarthermische Kraftwerksanlage 1 umfasst ein Solarfeld 2, in dem die Sonnenstrahlung konzentriert und in Wärmeenergie umgewandelt wird. Das Solarfeld 2 kann beispielsweise Parabolrinnenkollektoren, Solartürme oder Fresnel-Kollektoren aufweisen. Konzentrierte Sonnenstrahlung wird an ein Wärmeträgermedium, beispielsweise Thermoöl, abgegeben, das gegenüber Wasser einen wesentlich höheren Siedepunkt aufweist, so dass Temperaturen von 300-400 °C erreicht werden können. Über Rohrleitungen 19,20,21 wird das Wärmeträgermedium mittels einer Thermoölpumpe 13 zu Wärmetauschern 14,15,16 transportiert, in denen Wasser erwärmt 14, verdampft 15 und der erzeugte Dampf überhitzt 16 wird, wobei sich das Wärmeträgermedium wieder abkühlt. Das abgekühlte Wärmeträgermedium wird zurück in das Solarfeld 2 gepumpt, so dass sich ein geschlossener Wärmeträgermedium-Kreislauf 22 ergibt.

Der überhitzte Dampf wird über eine Frischdampfleitung 3 in eine Dampfturbine 4 als Arbeitsfluid eingeleitet. Die Dampfturbine 4 umfasst eine Hochdruckstufe 5, die als separate Hochdruckteilturbine ausgeführt ist, eine Mitteldruckstufe 6, die als separate Mitteldruckteilturbine ausgeführt ist, und eine Niederdruckstufe 7, die als separate Niederdruckteilturbine ausgeführt ist, welche einen Generator 8 antreiben. In der Turbine 4 wird das Arbeitsfluid entspannt und anschließend in einem Kondensator 9 verflüssigt. Im Kühlturm 10 wird das erwärmte Kühlwasser rückgekühlt. Eine Speisewasserpumpe 11 pumpt das verflüssigte Wärmeträgermedium wieder zurück zu den Wärmetauschern 14,15,16, womit der Kreislauf 12 des Arbeitsfluids geschlossen ist.

Zur Überhitzung des abgekühlten Zwischenüberhitzungsdampfes nach der Hochdruckstufe 5 wird ein Teil des dem Solarfeld 2 entnommenen Wärmeträgermediums über die Rohrleitung 23 der Primärseite eines ersten Wärmetauschers 17 zugeführt und wird der nach der Hochdruckstufe 5 teilentspannte Dampf über eine Dampfleitung 24 der Sekundärseite des ersten Wärmetauschers 17 zugeführt, so dass der Wärmetauscher 17 als ein erster Überhitzer fungiert.

Im Ausführungsbeispiel der Figur 1 wird das bereits in der ersten Zwischenüberhitzung im Wärmetauscher 17 enthitzte Wärmeträgermedium zur Überhitzung des teilentspannten Dampfes nach der Mitteldruckstufe 6 im Wärmetauscher 18 genutzt, der somit einen zweiten Überhitzer darstellt. Hierzu wird der nach der Mitteldruckstufe 6 noch weiter entspannte Dampf über Dampfleitungen 25 der Sekundärseite des Wärmetauschers 18 zugeführt. Mit dieser Anordnung kann die Dampftemperatur vor der Niederdruckstufe 7 nochmals mit geringem Aufwand angehoben werden, da die Wärmetauscher 17, 18 so nah wie möglich am Maschinenhaus platziert werden. Durch die Nutzung des bereits enthitzten Wärmeträgermediums im zweiten Zwischenüberhitzer, also dem Wärmetauscher 18, kann die Dampftemperatur aber nicht mehr auf das Niveau der Frischdampftemperatur angehoben werden.

In der in Figur 2 gezeigten Ausführung erfolgt die erste Zwischenüberhitzung im Wärmetauscher 17 wie im Ausführungsbeispiel der Figur 1. Die Überhitzung des teilentspannten Dampfes zwischen Mitteldruckstufe 6 und Niederdruckstufe 7 im zweiten Zwischenüberhitzer, dem Wärmetauscher 18, erfolgt aber nicht im Wärmetausch mit enthitztem Wärmeträgermedium, sondern mit Wärmeträgermedium direkt vom Solarfeld 2. Hierzu wird Wärmeträgermedium vom Solarfeld 2 über die Leitung 26 der Primärseite des zweiten Wärmetauschers 18 zugeführt. Dadurch kann die Dampftemperatur vor der Niederdruckstufe 7 wieder auf das Niveau der Frischdampftemperatur angehoben werden und eine deutliche Wirkungsgradsteigerung im Wasser-Dampf-Kreislauf 12 erzielt werden.

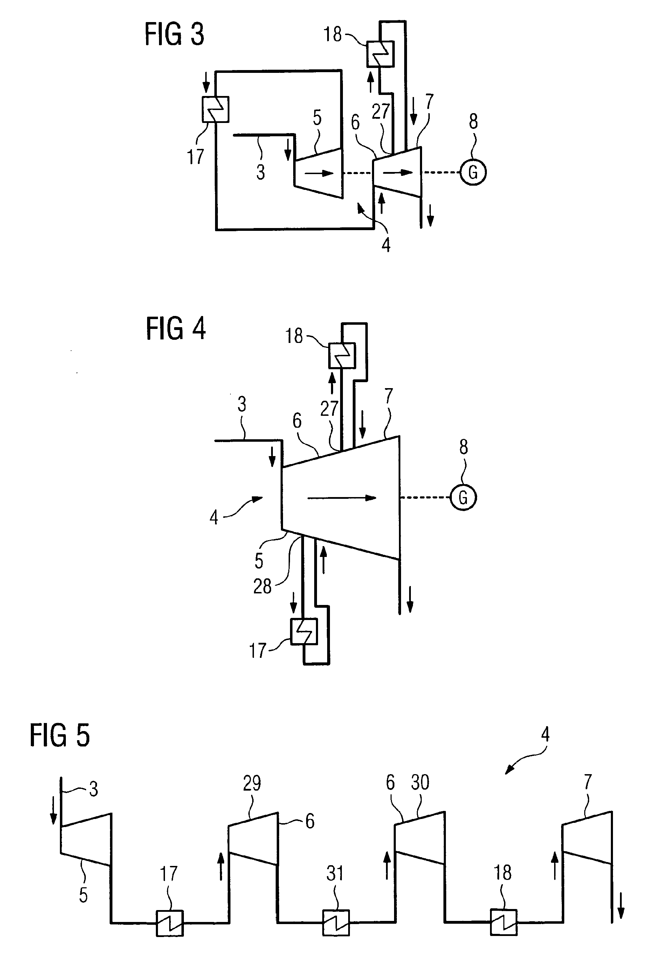

Figur 3 zeigt eine alternative Ausführungsform der Erfindung, bei der die Mitteldruckstufe 6 und die Niederdruckstufe 7 in einer Teilturbine zusammengefasst sind. Die Zwischenüberhitzung zwischen Mittel- 6 und Niederdruckstufe 7 erfolgt über eine Mitteldruck/Niederdruck-Anzapfung 27. Der an dieser Stelle entnommene Dampf wird analog der Ausführungsbeispiele der Figuren 1 oder 2 im zweiten Zwischenüberhitzer 18 zwischenüberhitzt.

Ein weiteres Ausführungsbeispiel der Erfindung ist in Figur 4 gezeigt. Hoch- 5, Mittel- 6 und Niederdruckstufe 5 sind in einer Turbine 4 zusammengefasst. Die Zwischenüberhitzung zwischen Mittel- 6 und Niederdruckstufe 7 erfolgt wie bei der Ausführungsform der Figur 3 über eine Mitteldruck/Niederdruck-Anzapfung 27 und den zweiten Zwischenüberhitzer 18. Die Zwischenüberhitzung zwischen Hoch- 5 und Mitteldruckstufe 6 erfolgt analog über eine Hochdruck/Mitteldruck-Anzapfung 28 und den ersten Zwischenüberhitzer 17. Die Zwischenüberhitzer 17 und 18 können dabei primärseitig entweder in Reihe, wie in Figur 1, oder parallel, wie in Figur 2, geschaltet sein.

Figur 5 zeigt ein Ausführungsbeispiel der Erfindung, mit Hoch- 5, Mittel- 6 und Niederdruckstufe 7, sowie den aus den Figuren 1 bis 4 bekannten ersten und zweiten Zwischenüberhitzern 17 und 18, bei dem die Mitteldruckstufe 6 einen ersten 29 und einen zweiten Mitteldruckstufenabschnitt 30 umfasst und über einen dritten Zwischenüberhitzer 31, der sekundärseitig zwischen den ersten 29 und zweiten Mitteldruckstufenabschnitt 30 geschaltet ist, eine weitere Zwischenüberhitzung erfolgen kann. Primärseitig kann der dritte Zwischenüberhitzer 31 wie der erste und der zweite Zwischenüberhitzer 17,18 in den Wärmeträgermedium-Kreislauf 22 (siehe Figuren 1 und 2) geschaltet sein. Dabei können die Zwischenüberhitzer 17,18 und 31 bezüglich ihrer Primärseiten in Reihe, parallel oder in gemischter Konfiguration geschaltet sein.

## Patentansprüche

1. Solarthermische Kraftwerksanlage (1) mit einem solaren Kraftwerksteil und einem konventionellen Kraftwerksteil, wobei der solare Kraftwerksteil einen Wärmeträgermedium-Kreislauf (22) umfasst und der konventionelle Kraftwerksteil einen Arbeitsfluid-Kreislauf (12) umfasst, und einem Dampferzeuger zur Übertragung von Wärme vom Wärmeträgermedium-Kreislauf (22) auf den Arbeitsfluid-Kreislauf (12), mit einer Dampfturbine (4) zur Entspannung eines Arbeitsfluids unter Abgabe technischer Arbeit, wobei die Dampfturbine (4) eine Hochdruckstufe (5), eine Mitteldruckstufe (6) und eine Niederdruckstufe (7) umfasst, mit mindestens einem zwischen die Hochdruckstufe (5) und die Mitteldruckstufe (6) geschalteten ersten Zwischenüberhitzer (17) und mindestens einem mit dem ersten Zwischenüberhitzer (17) zusammenwirkenden und zwischen die Mitteldruckstufe (6) und die Niederdruckstufe (7) geschalteten zweiten Zwischenüberhitzer (18) zum gezielten Einstellen der Dampfzustände des Arbeitsfluids.

2. Die solarthermische Kraftwerksanlage (1) nach Anspruch 1, wobei die Zwischenüberhitzer (17,18) primärseitig in den Wärmeträgermedium-Kreislauf (22) und sekundärseitig in den Arbeitsfluid-Kreislauf (12) geschaltet sind.

3. Die solarthermische Kraftwerksanlage (1) nach Anspruch 2, wobei der mindestens eine zweite Zwischenüberhitzer (18) in Strömungsrichtung eines Wärmeträgermediums dem mindestens einen ersten Zwischenüberhitzer (17) nachgeschaltet ist.

4. Die solarthermische Kraftwerksanlage (1) nach Anspruch 2, wobei der mindestens eine zweite Zwischenüberhitzer (18) in Strömungsrichtung eines Wärmeträgermediums dem mindestens einen ersten Zwischenüberhitzer (17) parallel geschaltet ist.

5. Die solarthermische Kraftwerksanlage (1) nach einem der vorhergehenden Ansprüche, wobei das Wärmeträgermedium ein Thermoöl ist.

6. Die solarthermische Kraftwerksanlage (1) nach einem der vorhergehenden Ansprüche, wobei das Arbeitsfluid Wasser bzw. Wasserdampf ist.

7. Die solarthermische Kraftwerksanlage (1) nach einem der vorhergehenden Ansprüche, wobei die Mitteldruckstufe (6) einen ersten Mitteldruckstufenabschnitt (29) und einen zweiten Mitteldruckstufenabschnitt (30) umfasst und mindestens ein dritter Zwischenüberhitzer (31) sekundärseitig zwischen den ersten Mitteldruckstufenabschnitt (29) und den zweiten Mitteldruckstufenabschnitt (30) geschaltet ist.

8. Die solarthermische Kraftwerksanlage (1) nach Anspruch 7, wobei der dritte Zwischenüberhitzer (31) primärseitig in den Wärmeträgermedium-Kreislauf (22) geschaltet ist.

9. Verfahren zum Betrieb einer solarthermischen Kraftwerksanlage (1), in welcher ein Arbeitsfluid in einem Kreislauf (12) geführt wird, bei dem das Arbeitsfluid unter Abgabe technischer Arbeit in einer Dampfturbine (4), umfassend eine Hochdruckstufe (5), eine Mitteldruckstufe (6) und eine Niederdruckstufe (7), entspannt wird und zwischen Hochdruckstufe (5) und Mitteldruckstufe (6) und zwischen Mitteldruckstufe (6) und Niederdruckstufe (7) überhitzt wird.

10. Das Verfahren nach Anspruch 10, wobei das Arbeitsfluid im Bereich der Mitteldruckstufe (6) zwischenüberhitzt wird.
